**Europäisches Patentamt**

**European Patent Office**

**Office européen des brevets**

(19)

(11) Veröffentlichungsnummer: **0 134 211**
**B1**

(12)

# EUROPÄISCHE PATENTSCHRIFT

(45) Veröffentlichungstag der Patentschrift:
**20.11.86**

(21) Anmeldenummer: **83901920.5**

(22) Anmeldetag: **15.06.83**

(86) Internationale Anmeldenummer:
**PCT/EP 83/00155**

(87) Internationale Veröffentlichungsnummer:
**WO 84/01003 (15.03.84** Gazette **84/7)**

(51) Int. Cl.⁴: **F 04 B 49/00,** F 04 B 23/10,
F 04 B 1/06, B 62 D 5/06

(54) **PUMPENANORDNUNG FÜR HYDRAULISCHE ANLAGEN.**

(30) Priorität: **27.08.82 DE 3231878**

(43) Veröffentlichungstag der Anmeldung:
**20.03.85 Patentblatt 85/12**

(45) Bekanntmachung des Hinweises auf die Patenterteilung:
**20.11.86 Patentblatt 86/47**

(84) Benannte Vertragsstaaten:
**DE FR GB**

(56) Entgegenhaltungen:
**FR - A - 2 124 897**
**FR - A - 2 443 365**
**US - A - 3 639 087**
**US - A - 3 657 971**

(73) Patentinhaber: **ZAHNRADFABRIK FRIEDRICHSHAFEN AKTIENGESELLSCHAFT, Löwentaler Strasse 100 Postfach 2520,
D-7990 Friedrichshafen 1 (DE)**

(72) Erfinder: **LISKA, Georg, Staufenstr. 14,
D-7071 Durlach-Zimmerbach (DE)**

(74) Vertreter: **Raue, Reimund, Zahnradfabrik Friedrichshafen AG Löwentaler Strasse 100 Postfach 2520,
D-7990 Friedrichshafen 1 (DE)**

## Beschreibung

Bekannte Pumpen ohne Saugdrosselung, wie z.B. Flügelzellen- und Zahnradpumpen nach dem Oberbegriff von Anspruch 1, erzeugen in Abhängigkeit von der Antriebsdrehzahl einen mehr oder weniger grossen Förderstrom, d.h., die Förderstromkennlinie hat einen linearen Anstieg. Steigt die Last am Verbraucher über einen Höchstwert an, so öffnet ein der Pumpe nachgeschaltetes Druckbegrenzungsventil, welches den überschüssigen Förderstrom zu einem Ölbehälter abströmen lässt.

Radialkolbenpumpen (z.B. DE-C-2 901 240) haben zwar die vorteilhafte Eigenschaft der Strombegrenzung durch die Ansaugdrosselung bei steigender Drehzahl, der Abregelpunkt des Förderstromes liegt jedoch bei einer verhältnismässig niedrigen Drehzahl von ca. 1200 $min^{-1}$ und bleibt dann nahezu konstant.

Aus der FR-A-2 443 365 ist eine Radialkolbenpumpe mit einer von einer Pumpendruckleitung abzweigenden und ein Druckbegrenzungsventil enthaltenden Rücklaufleitung bekannt, die mittels eines Injektors in die Ansaugleitung der Pumpe einmündet. Bei Erreichen des Maximaldruckes öffnet das Druckbegrenzungsventil, so dass der nicht benötigte Ölstrom über den Injektor gegen den Pumpenansaugstrom eingespritzt wird. Hierbei erzeugt der Injektor in der Ansaugleitung einen Unterdruck, der die Pumpe nur noch eine geringe Ölmenge ansaugen lässt. Die Wirkung des Injektors ist abhängig vom Verbraucherstrom und nur auf den Bereich des Höchstdruckes begrenzt.

Für bestimmte Einsatzzwecke der Pumpe, z.B. für die Versorgung von Hilfskraftlenkungen von Kraftfahrzeugen, wird eine fallende Förderstromkennlinie angestrebt, d.h., es soll mit steigender Fahrgeschwindigkeit bzw. Drehzahl eine kleinere Ölmenge gefördert werden. Auf diese Weise kann bei höheren Fahrgeschwindigkeiten, bei welchen keine grossen Lenkausschläge mehr erforderlich sind, die Lenkkraftunterstützung reduziert werden. Eine so ausgelegte Hilfskraftlenkung vermittelt dem Fahrer den besonders bei höheren Fahrgeschwindigkeiten erwünschten Fahrbahnkontakt.

Um dieses Ziel zu erreichen, ist es aus der DE-A-2 906 047 (Fig. 3) bereits bekannt, in der Druckleitung einer Pumpe ein elektrisches Drosselventil vorzusehen, welches in Abhängigkeit eines der Fahrgeschwindigkeit entsprechenden elektrischen Signals verstellt wird. Das elektrische Drosselventil steuert den Ölzufluss zum Verbraucher demzufolge so, dass bei langsamer Fahrt der volle Pumpenstrom im Lenkzylinder wirksam wird, während der Pumpenstrom bei schneller Fahrt stark verringert wird, wobei das Überschussöl in den Öltank zurückfliesst. Eine derartige stromabwärts der Pumpe eingesetzte Drosseleinrichtung ist aufwendig gebaut und arbeitet im Verbund mit einer nicht sauggeregelten Pumpe besonders im oberen Geschwindigkeitsbereich mit einem verhältnismässig hohen Verluststrom.

Ausgehend von den beschriebenen Pumpenausführungen ist es Aufgabe der Erfindung, eine möglichst einfache und kostengünstige Einrichtung zu finden, mittels welcher eine fallende Förderstromkennlinie über der Drehzahl erzielbar ist.

Diese Aufgabe wird durch das im Kennzeichen von Anspruch 1 enthaltene Merkmal gelöst.

Nach der Erfindung ist auf der Ansaugseite der Pumpe eine zweite Fördereinrichtung vorgesehen, die eine drehzahlabhängige, der Saugrichtung entgegengesetzte Förderwirkung erzeugt. Somit entsteht auf der Ansaugseite ein drehzahlabhängiger Staudruck, der zur Regelung der ersten Fördereinrichtung ausgenutzt wird. Auf diese Weise erhält man die gewünschte fallende Förderstromkennlinie.

Eine vorteilhafte Ausführungsform in Verbindung mit einer Radialkolbenpumpe ist in Anspruch 2 aufgezeigt. Dabei ist eine mit Fördergliedern versehene Scheibe an der Pumpenwelle konzentrisch befestigt, die den gegen den Ansaugstrom gerichteten Strom erzeugt. Es entsteht somit ein den Ansaugstrom behindernder örtlicher Zirkularstrom, der sich mit steigender Drehzahl verstärkt. Dieser drehzahlabhängige Zirkularstrom ist verantwortlich für die fallende Förderstromkennlinie. Eine derartige Pumpe arbeitet nicht nur energiesparend, sondern auch verschleissfrei, da keine zusätzlichen Bauteile benötigt werden. Ausserdem ergibt sich der Vorteil einer hohen Betriebssicherheit.

Nachfolgend ist ein Ausführungsbeispiel der Erfindung anhand der Zeichnung näher erläutert.

Es zeigen:

Fig. 1 eine schematische Darstellung der erfindungsgemässen Pumpenanordnung,

Fig. 2 ein Ausführungsbeispiel anhand eines Axialschnitts durch eine Radialkolbenpumpe,

Fig. 3 die Seitenansicht einer den Gegenstrom erzeugenden Scheibe entsprechend Fig. 2 und

Fig. 4 ein Förderstrom-Diagramm.

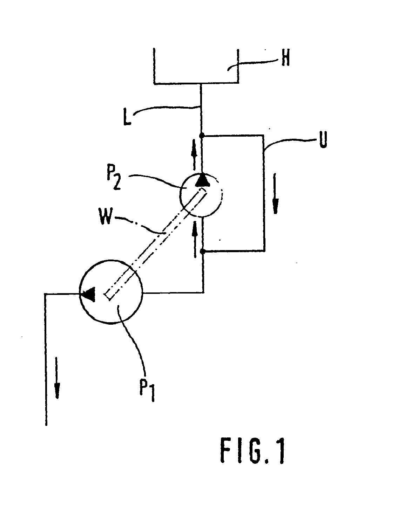

Die Pumpenanordnung nach Fig. 1 besteht aus einer ersten Fördereinrichtung $P_1$, die über eine Ansaugleitung L und eine Umgehungsleitung U mit einem Behälter H in Verbindung steht und einen nicht dargestellten Verbraucher mit Drucköl versorgt. Über eine die Fördereinrichtung $P_1$ antreibende Welle W ist gleichzeitig eine kleinere zweite Fördereinrichtung $P_2$ antreibbar, die in die Ansaugleitung L eingebaut ist und in dieser einen Gegenstrom erzeugt. Da sich mit steigender Antriebsdrehzahl der Fördereinrichtung $P_1$ auch die Förderwirkung der Fördereinrichtung $P_2$ erhöht, entsteht in der Ansaugleitung L ein wachsender Staudruck. Die Fördereinrichtung $P_1$ kann daher immer weniger Drucköl ansaugen, d.h. die Förderstromkennlinie fällt über der Drehzahl ab.

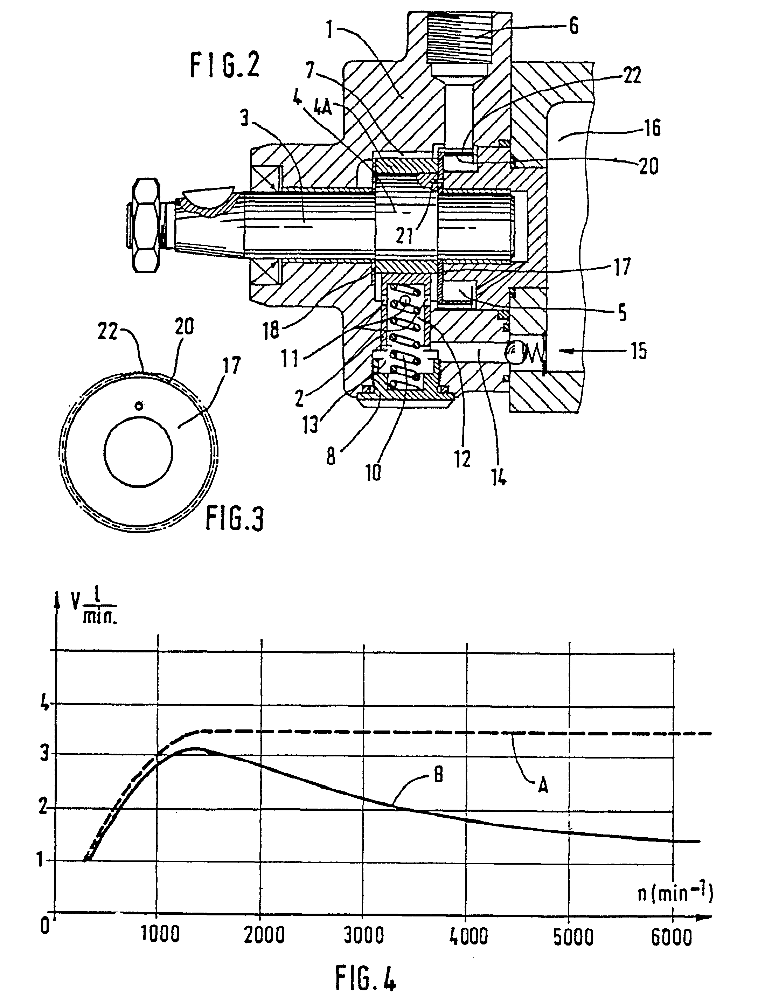

Das Ausführungsbeispiel nach Fig. 2 zeigt als erste Fördereinrichtung eine Radialkolbenpumpe mit vorzugsweise drei in einer Ebene eines Gehäuses 1 angeordneten Förderkolben. Eine Welle 3 trägt einen Exzenter 4 mit einem Laufring 4A. Beim Umlauf lässt der Exzenter 4 jeden Förderkolben 2 abwechselnd eine Hubbewegung ausführen. Der Exzenter 4 dreht sich in einem über eine Gehäuseringnut 5 an einen Ansauganschluss 6 angeschlossenen Saugraum 7. Die im Gehäuse 1 geführten Förderkolben 2 werden durch an Schraubkappen 8 abgestützte Druckfedern 10 an der Umfangsfläche des Exzenters 4 in Anlage gehalten und ragen dabei mit ihren dem Exzenter 4 zugewandten Kolbenfüssen in den Saugraum 7 hinein. Die Förderkolben 2 sind mit Einlassöffnungen 11 versehen, durch die beim Auf- und Abwärtsbewegen der Kolben in bekannter Weise das Drucköl angesaugt wird, das dann über Kolbeninnenräume 12 bzw. Zylinderräume 13 in Druckkanäle 14 verdrängt wird. Die Druckkanäle 14 stehen über Auslassventile 15 mit einem an den Verbraucher angeschlossenen Sammelraum 16 in Verbindung. — Bis hierher ist die beschriebene Radialkolbenpumpe bekannt.

Nach der Erfindung ist als zweite Fördereinrichtung seitlich am Exzenter 4 eine Scheibe 17 vorgesehen, die vorteilhaft einen in die Gehäuseringnut 5 hineinragenden topfförmigen Ringansatz 20 trägt. Die Scheibe 17 ist mittels eines Stiftes 21 am Exzenter 4 befestigt. Der Ringansatz 20 ist mit geeigneten Fördergliedern 22, im vorliegenden Falle z.B. mit einer Kerbverzahnung (Fig. 3) versehen. Die Förderglieder 22 können jedoch auch in Form von Rillen, Schaufeln oder eines Gewindes und dergleichen ausgeführt sein. Durch Verändern des Aussendurchmessers des Ringansatzes 20 bzw. der Anzahl oder Form der Förderglieder kann auf einfache Weise der Fördermengen-Verlauf beeinflusst werden.

Es ist auch denkbar, lediglich eine breitere Scheibe 17 ohne einen Ringansatz 20 zu verwenden und die Förderglieder 22 nur in die Stirnfläche der Scheibe einzuarbeiten. Ebenso ist es möglich, die Förderglieder 22 an der der Gehäuseringnut 5 zugewandten Seitenfläche der Scheibe anzubringen.

Ein Vorteil der Scheibe 17 besteht weiterin darin, dass diese gleichzeitig noch als Anlaufscheibe für den Exzenter 4 dient. Eine weitere Anlaufscheibe 18 ist auf der gegenüberliegenden Seite des Exzenters 4 eingesetzt.

In Fig. 4 ist der Förderstrom-Verlauf über der Drehzahl dargestellt. Die Kurve A zeigt den Förderstrom-Verlauf einer bekannten Radialkolbenpumpe. Der Förderstrom wird bei einer Drehzahl von ca. 1200 $min^{-1}$ abgeregelt und bleibt dann nahezu konstant. Die Kurve B zeigt hingegen die fallende Förderstromkennlinie einer mit der erfindungsgemässen Einrichtung ausgerüsteten Radialkolbenpumpe.

## Patentansprüche

1. Pumpenanordnung für hydraulische Anlagen mit einer einen Hauptstrom erzeugenden ersten Fördereinrichtung ($P_1$) gekennzeichnet durch folgende Merkmale:
a) auf der Ansaugseite der ersten Fördereinrichtung ($P_1$) ist eine zweite Fördereinrichtung ($P_2$) mit zur Saugrichtung entgegengesetzter drehzahlabhängiger Förderwirkung vorgesehen;
b) die zweite Fördereinrichtung ($P_2$) ist eine kleinere Fördereinrichtung als die erste ($P_1$);
c) die zweite Fördereinrichtung ($P_2$) ist parallel an einen Teil der Ansaugleitung (L) der ersten Fördereinrichtung ($P_1$) angebracht;
d) der Förderstrom der zweiten Fördereinrichtung ($P_2$) ist gegen den Ansaugstrom in der Ansaugleitung (L) gerichtet und
e) es wird eine fallende Förderstromkennlinie erzielt.

2. Pumpenanordnung nach Anspruch 1, dadurch gekennzeichnet, dass die erste Fördereinrichtung als eine Radialkolbenpumpe ausgebildet ist und dass die zweite Fördereinrichtung als eine an einer Pumpenwelle (3) konzentrisch befestigte Scheibe (17) mit Fördergliedern (22) ausgeführt ist und die Förderglieder (22) einen gegen den Ansaugstrom gerichteten Strom erzeugen.

3. Pumpenanordnung nach Anspruch 2, dadurch gekennzeichnet, dass die Scheibe (17) einen topfförmigen, die Förderglieder (22) tragenden Ringansatz (20) aufweist.

4. Pumpenanordnung nach Anspruch 2 oder 3, dadurch gekennzeichnet, dass die Förderglieder (22) in Form einer Verzahnung ausgeführt sind.

5. Pumpenanordnung nach Anspruch 2 oder 3, dadurch gekennzeichnet, dass die Scheibe (17) zugleich Anlaufscheibe für den Exzenter (4) ist.

## Claims

1. A pumping device for hydraulic systems comprising a main-flow producing first feed installation ($P_1$) characterized in that:
a) on the suction side of the first feed installation ($P_1$) is arranged a second feed installation ($P_2$) with a speed dependent delivery flow opposite to direction of suction;
b) the second feed installation ($P_2$) is smaller than the first feed installation ($P_1$);
c) the second delivery unit ($P_2$) is connected in parallel to a part of the suction line (L) of the feed installation ($P_1$);
d) the delivery flow of the second feed installation ($P_2$) is directed against the suction flow in the suction line (L) and
e) by this, a decreasing feed characteristic curve is achieved.

2. A pumping device according to claim 1, characterized in that the first feed installation is designed as a radial piston pump, and that the second feed installation is designed as a concentric disc (17) with feed members (22) create a flow directed against the suction flow.

3. A pumping device according to claim 2, characterized in that the disc (17) shows a pot-shaped ring collar (20) holding the delivery members (22).

4. A pumping device according to claim 2 or 3, characterized in that the feed members (22) are designed in the shape of serrations.

5. A pumping device according to claim 2 or 3, characterized in that the disc (17) and thrust washer for the eccentric rotor function simultaneously (4).

## Revendications

1. Une disposition de la pompe dans les équipements hydrauliques avec un premier dispositif de refoulement ($P_1$) engendrant un courant principal, caractérisée par:
a) une deuxième dispositif de refoulement ($P_2$) est prévu sur l'aspiration du premier dispositif de refoulement ($P_1$), avec effet de refoulement dépendant de la vitesse de rotation et opposé au sens d'aspiration;

b) le deuxième dispositif de refoulement (P₂) est plus petit que le premier (P₁);

c) le deuxième dispositif de refoulement (P₂) est monté parallèlement à une partie de la conduite d'aspiration (L) du premier dispositif de refoulement;

d) le liquide refoulé par le deuxième dispositif de refoulement (P₂) est dirigé dans le sens opposé à celui de l'aspiration, dans cette conduite (L), et

e) l'on obtient une courbe caractéristique descendante du courant refoulé.

2. Une disposition de la pompe selon 1, caractérisée par la réalisation du premier dispositif de refoulement sous forme d'une pompe à pistons radiaux, tandis que le deuxième dispositif de refoulement l'est sous forme d'un disque (17) avec éléments de refoulement (22), fixé concentriquement sur un arbre de pompe (3), les éléments de refoulement engendrant un courant opposé à celui de l'aspiration.

3. Une disposition de la pompe selon 2, caractérisée par un disque (17) conu en forme de pot, équipé d'une embase annulaire (20) portant les éléments de refoulement (22).

4. Une disposition de la pompe selon 2 et 3, caractérisée par des éléments de refoulement (22) réalisés sous forme de denture.

5. Une disposition de la pompe selon 2 ou 3, caractérisée par le fait que le disque (17) sert simultanément de rondelle de butée pour l'excentrique (4).

FIG.1

FIG.2

FIG.3

FIG.4